# EUROPEAN PATENT SPECIFICATION

(11) **EP 2 012 578 B1**
(45) Date of publication and mention of the grant of the patent: **27.05.2020**
(21) Application number: 07730581.1
(22) Date of filing: 27.04.2007
(51) Int. Cl.: A01G 23/00, B23D 49/00, A01G 3/08

(54) **LAND CLEARING DEVICE**
RODUNGSVORRICHTUNG
DISPOSITIF DE DÉFRICHAGE

(30) Priority: 28.04.2006 FI 20060412
(43) Date of publication of application: 14.01.2009
(73) Proprietor: Mense Oy, 54500 Taavetti (FI)
(72) Inventor: MENTULA, Seppo, FI-54500 Taavetti (FI)
(74) Representative: Papula Oy
(86) International application number: PCT/FI2007/000112
(87) International publication number: WO 2007/125158

(56) References cited:
- WO-A1-95/21521
- WO-A1-95/21521
- FI-U1- 4 628
- FR-A1- 2 663 581
- GB-A- 986 639
- US-A- 4 713 930
- US-A- 4 713 930
- US-A- 5 271 154
- US-A- 5 271 154

## Description

### FIELD OF THE INVENTION

The invention relates to the land clearing device as defined in claim 1.

### BACKGROUND OF THE INVENTION

The idea for the invention arose from the ever-growing need for clearance in coppices, young stands, and forestry lands in general, along power lines, on the roadsides, in the parks, along outdoor routes, and in the field of landscape management, which is catching on vastly. In all these applications, the vegetation intended for clearing may vary greatly from slight grass to dense willow-herb or raspberry vegetation, from single bushes to vast willow-tree thickets, or from thin brushwood even to relatively thick trees. Furthermore, the surface of the land intended for clearing may vary, comprising stubs, rocks and other such obstacles which easily damage the blades of the land clearing device.

The most typical land clearing device is a portable clearing saw, in which a sawing blade, a cutting blade, or a steel or nylon wire can be used. The most significant problem of the clearing saw is its ineffectiveness and therefore its expensiveness. In automated land clearance, chain crushers or rotating and cutting blade rows are used in working machines as connected to the boom assembly, but these machines are not, however, applicable to all uses. Firstly, the quality of their work is often messy. They may pose a danger when used in urban settlements, because the fast rotating blades may throw soil, rocks and wood chips or pieces of the blades that can reach very far. Also, the blades must be repaired or replaced relatively often if the land clearing conditions become even slightly more difficult. Furthermore, said land clearing devices are relatively large and heavy, so their operation requires large and heavy, and therefore space-consuming, working machines, which accordingly leave their marks for example in young stands and in areas intended for landscaping. Document US-4713930-A discloses a mobile brush cutter.

### OBJECTIVE OF THE INVENTION

The objective of the invention is to eliminate the drawbacks referred to above.

One specific objective of the invention is to disclose a novel land clearing device which is light and compact, suitable without any modifications for all land clearing from slight grass to relatively thick trees, the blades of which device are strong and endure almost any object without being damaged.

### SUMMARY OF THE INVENTION

The land clearing device in accordance with the invention is characterized by what has been presented in the characterized portion of claim 1.

The land clearing device in accordance with the invention is intended for use in conjunction with a hydraulic boom crane as connected to its head. The land clearing device comprises a body which can be connected to the head of the hydraulic boom crane, a hydraulic motor supported on the body, and a blade operated by the hydraulic motor. In accordance with the invention, two elongated blade guides are supported on the body, which guides may be plate-like, rod-like, or bar-like elements, providing appropriate rigidity to the construction. The space between the blade guides comprises two blade panels, reciprocating at the same pace and in opposite directions and connected to the hydraulic motor. Furthermore, both blade panels comprise knife-like blade rows flush with each other, extending in opposite directions.

Preferably, the blade rows comprise a set of V-shaped blades, both sides of which are sharp and the point is directed out from the blade. Thereby, as the blades reciprocate in opposite directions, openings appear between the V-shaped blades, which openings then close rapidly, and, as the openings are closed by the sharp-edged blades moving in opposite directions, the material caught in them becomes cut, regardless of its nature. When encountered by a thickish tree, the construction functions as a powerful saw which rapidly saws and crushes any object, even the thicker ones. Also the reciprocating movement of both blade panels is an advantageous structural solution from the functional point of view. It ensures that any object cannot hit the points of the V-shaped blades and become stuck in them; instead all objects intended to be cut are caught into the spaces between the blades and thereby become cut.

In another embodiment of the invention, the blades in the blade rows comprise cutting and knife-like sides and a milling point construction, which enables cutting of considerably thick trunks even more efficiently than the sharp sawing points. The milling blades preferably comprise chisel-like blades which point to both working directions, said blades being either slanted or perpendicular with respect to the direction of motion and working chippingly to effectively mill and cut even a thicker trunk. Such blades do not reject any thick trees encountered, but instead efficiently stick to the trunk and cut it.

In the land clearing device in accordance with the invention, the hydraulic motor used at the head of the boom assembly may be a rotating motor which is arranged to move the blade panels by means of a technique known per se, i.e. by means of a crankshaft and connecting rods.

In another embodiment, the hydraulic motor is a rotating motor to which only one blade panel is connected by means of the crankshaft and the connecting rod. In this case, the blade panels are interconnected by a lever mechanism which moves also the other blade panel at the same pace but in opposite direction.

A solution in which the hydraulic motor is a double hydraulic cylinder to which the blade panels are connected in order to reciprocate them has revealed itself as a preferred embodiment. In this case, the hydraulic cylinder provides significant advantages. It is light and compact and provides per se a straight reciprocating movement, so that any crank constructions or other changes to the movement of force are not required. Furthermore, the use of the double hydraulic cylinder in which the cylinder capacity is equal on both sides of the piston ensures a reciprocating movement of the blade panels at an equal speed and without any jerking. Also in the operation by a hydraulic cylinder, only one of the blades can be connected to the hydraulic cylinder, in which case the blades can be interconnected by means of a suitable synchronizing arrangement, such as a lever mechanism, for their simultaneous movement in opposite directions.

In one embodiment of the invention, two hydraulic cylinders, connected to different blades, are used as the power unit. Also in this case, the blades are interconnected by means of a suitable synchronizing lever, which ensures the simultaneous reciprocating movement of the blades in opposite directions. If suitable double-acting hydraulic cylinders are used in this embodiment, a cross-connection may preferably be arranged between them, which ensures their simultaneous operation.

A construction in which the hydraulic cylinder is directly connected to one blade panel, and the piston rod is connected to the other blade panel, has revealed itself as a particularly preferable embodiment. In this way, the blade panels move relative to each other, as the hydraulic cylinder and its piston move relative to each other. In this case, however, the movement of the blade panels must be guided or limited between the blade guides. This can be achieved by means of different mechanical barriers which the blades hit when in motion. However, the movement of the blade panels is preferably guided by means of a suitable synchronizing arrangement between the blade panels, such as a rocker arm supported at the center on the body of the device, to the ends of which lever the hydraulic cylinder and the piston rod or the blade panels are connected. Thus, the blade panels cannot move freely between the blade guides, but only on a limited path defined by the rocker arm.

As the blade construction comprises two blade panels, constantly reciprocating and rubbing against each other, and blade guides on the outer side of the blade panels, the construction has three surfaces which are constantly in abrasive motion. Considering further the conditions in which the blade construction is used, i.e. dusty and dirty ground and constant moisture due to water and fluids of the vegetation intended for clearance, it is preferable to have lubricating grooves on the opposing surfaces of the blade panels and on the opposing surfaces of the blade panels and the blade guides, via which grooves lubricant is directed from the body to the surfaces which are rubbed against each other. The lubricant can be led to lubricating grooves via suitable valves from the hydraulic circuit which operates the hydraulic motor, so that separate lubricating systems and lubricant containers are not required.

The land clearing device in accordance with the invention provides significant advantages compared to the prior art. The structure of the land clearing device is simple and reliable. It is compact and light, so it can be efficiently used at the head of boom assemblies as long as 10 meters even in relatively small working machines. The blade construction is strong and suitable for clearing, cutting and trimming of all types of biomaterials. Due to its lightness and compact size, it is suitable, when used manually, for working on hedges and other plants for their cutting and shaping.

### LIST OF FIGURES

In the following, the invention will be described in detail by means of examples with reference to the accompanying drawings, in which
Fig. 1 represents one land clearing device in accordance with the invention as connected to a working machine,
Fig. 2 represents a first embodiment of the land clearing device in accordance with the invention,
Fig. 3 represents a second embodiment of the land clearing device in accordance with the invention,
Fig. 4 represents a third embodiment of the land clearing device in accordance with the invention, and
Fig. 5 represents one detailed blade construction.

### DETAILED DESCRIPTION OF THE INVENTION

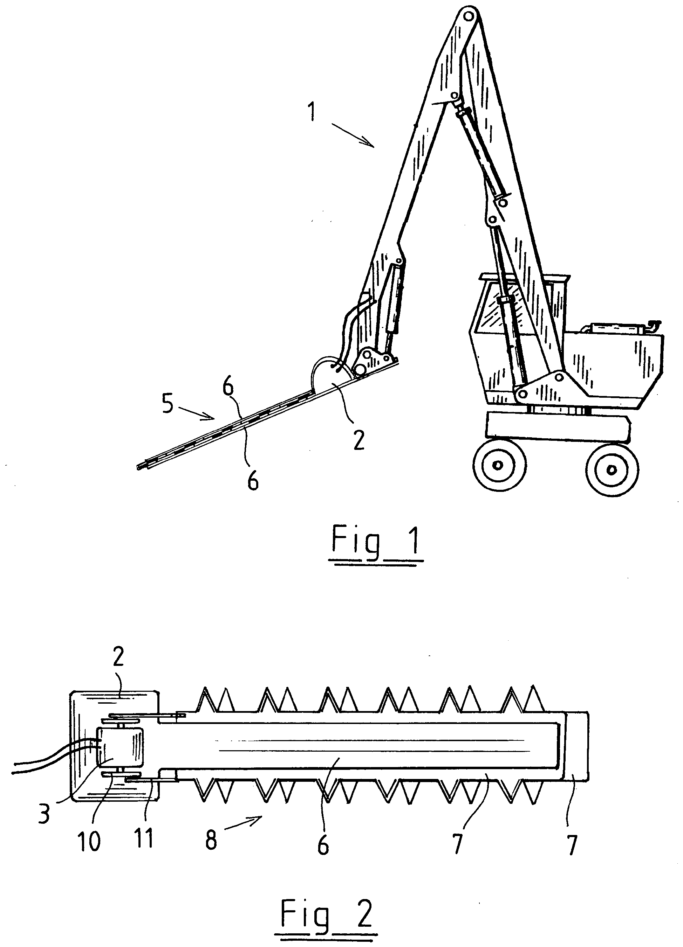

Fig. 1 represents a general view of the connection of the land clearing device in accordance with the invention to the head of a hydraulic boom assembly construction 1 as connected to a working machine, and its operation. Depending on the required working distance and the working machine used, the length of the boom assembly and the number of joints may vary freely. The substantial feature of the land clearing device in accordance with the invention is that it does not limit the selected working direction. The land clearing device can be used freely in horizontal direction, vertical direction and at different angles at the required heights, within the rotation limits of the joint construction of the boom assembly.

In the embodiment of Fig. 2, the land clearing device comprises a body 2 from which it can be connected to the boom assembly of the working machine. Two straight, plate-like and elongated blade guides 6 (both shown in Fig. 1) are connected to the body 2. Between the blade guides, two elongated blade panels 7 are placed such that their opposing surfaces rest against each other and their outer surfaces rest against the respective blade guides. Both blade panels have, along their longer sides, blade rows 8, comprising V-shaped blades 9. Both sides of the blades are sharpened from the side of the blade guides such that the sharp, cutting edges of the blades are flush with each other and facing each other in the blade panels.

A rotating hydraulic motor 3 is supported on the body 2, the connecting rods 11 connected to both ends of the crank shaft 10 of said motor. In Fig. 2, one of the connecting rods is connected to the lower blade panel and the other is connected to the upper blade panel. In this case, as the hydraulic motor 3 rotates, both blade panels 7 reciprocate between the blade guides 6 at the same pace and always in opposite directions, the sharp edges of the blades intersecting each other and cutting the material caught between them. For the cutting and operating characteristics of the device, it is substantial that the blades which cut in the same way are positioned on both sides of the device, so that cutting is achieved every time the device is moved. Similarly, it is substantial that both blade panels move relative to the body of the device, so that any single blade cannot hit the object intended for cutting and become stuck in it; instead the objects intended for cutting always end up in the spaces between the blades and therefore break with certainty.

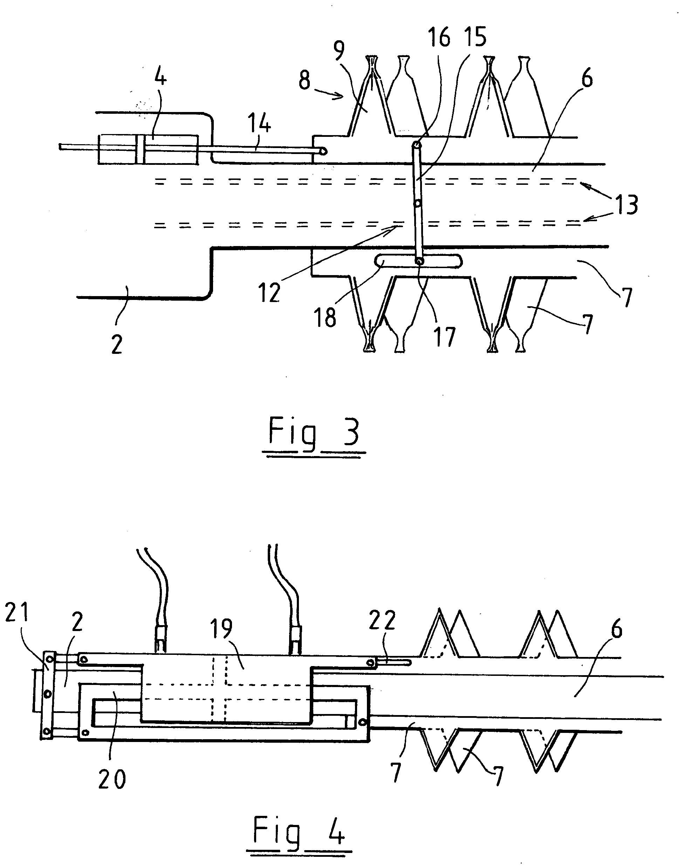

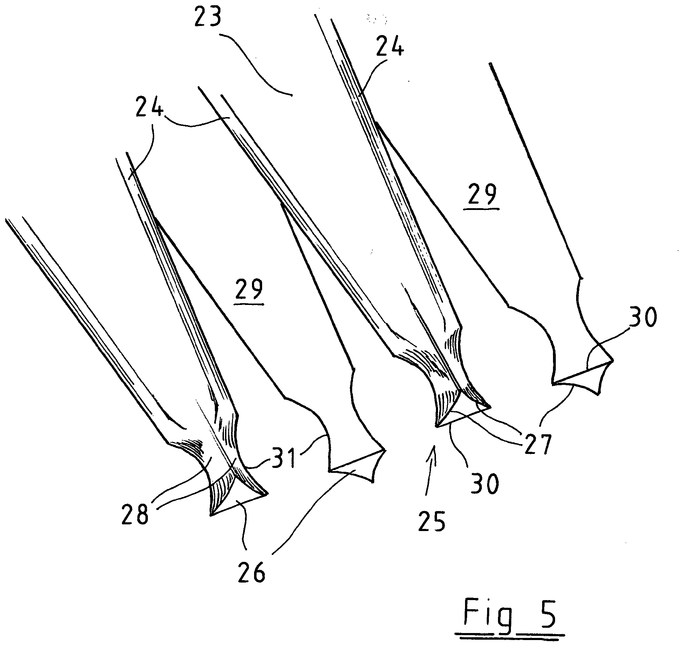

Fig. 3 represents a second embodiment of the invention in which the blades of the cutting blade panels differ from the embodiment of Fig. 1, and a hydraulic cylinder 4 is used as the power unit. The blade construction is presented in detail in Fig. 5. As to the hydraulic cylinder, it is a double hydraulic cylinder in which the cylinder capacities are equal on both sides of the piston. In this case, when the hydraulic cylinder is controlled by means of constant oil flow, the motion of the piston and, therefore, of the blade becomes uniform and equally fast in both directions.

In this embodiment, the piston rod 14 of the hydraulic cylinder is connected to only one of the blade panels 7, and the blade panels are mechanically interconnected by means of a lever mechanism 12. The lever mechanism 12 comprises a rigid lever 15, pivotally connected at the center to the blade guide 6, one end of which lever being connected by means of a joint 16 to the upper blade panel. The opposite end of the lever 15 is connected to the lower blade panel by means of a joint 17 through an elongated opening 18 provided in the topmost blade panel. Thus, as the hydraulic cylinder reciprocates the topmost blade panel between the blade guides 6, the lever 15 simultaneously moves the lower blade panel in opposite directions at the same speed. At the same time, the lever 15 limits the motion ranges of the blade panels 7 such that they only move within the defined limits.

In Fig. 3, lubricating grooves 13 are also schematically indicated in dashed line, which grooves are preferably arranged on the blade guide and/or blade panel surfaces which move against each other, into which grooves lubricant is directed from the body in a suitable manner, i.e. continuously or in cycles, such that these four plate-like parts are able to move easily relative to each other.

Fig. 4 represents a schematic view of a preferred embodiment of the invention which provides for an extremely compact, powerful and reliable land clearing device. It comprises, as in Figs. 2 and 3, two blade panels 7, reciprocating between two blade guides 6. In the figure, the hydraulic cylinder 19, operating as the power unit, is connected to the lower blade panel to move simultaneously with it. The connection between the hydraulic cylinder 19 and the lower blade panel is realized through an elongated opening 22 provided in the upper blade panel. The upper blade panel, in turn, is connected to the piston of the hydraulic cylinder, more particularly to the piston rod 20, such that the piston and the upper blade panel move together. The hydraulic cylinder is a so called double hydraulic cylinder, in which the piston rod extends in both directions from the piston and out of the cylinder as an evenly thick construction, such that cylinder capacities on both sides of the piston are equal. In this case, when the hydraulic cylinder is controlled by means of constant oil flow, the motion of the piston and, therefore, of the blade becomes uniform and equally fast in both directions.

To prevent the blade panels 7 from moving freely between the blade guides along their total length, a rocker arm 21 is pivotally connected, substantially at its central point, to the body of the device. One end of the rocker arm is pivotally connected to the moving assembly formed by the hydraulic cylinder 19 and the lower blade panel, and the other end is pivotally connected to the moving assembly formed by the piston rod 20 and the topmost blade panel. The rocker arm construction therefore limits the motion range of the blade panels between the blade guides to a specific, reciprocating motion.

The land clearing device of Fig. 4 is compact and light in all directions. It is also easily controllable by means of, for example, electronically or mechanically controlled hydraulic couplings (not shown in the figure), wherein hydraulic pressure is alternately directed to opposite sides of the piston of the hydraulic cylinder.

The land clearing device in accordance with the invention, and in particular the embodiment in accordance with Fig. 4, can also be easily built as a very compact and light, manually operated hedge trimmer. In this case, the manually portable clearing device comprises a blade body, a blade, and a motor, provided with suitable operating handles, the power unit being connected to the hydraulic motor via hydraulic hoses of sufficient length. The oil pump and the motor, either a combustion motor or an electric motor, rotating the pump may, therefore, be positioned farther from the object, within the limits defined by the length of the hydraulic hoses. It is also possible that the oil pump and the light combustion motor form an assembly designed to be carried on one's back or pulled along on wheels, so that the trimmer is easy to use in all surroundings.

Fig. 5 represents a more detailed view of one blade construction in accordance with the invention, which can be used in all land clearing devices in accordance with the invention, a more general description of which has been given in the context of the embodiment of Fig. 3. Both opposing blade rows comprise a set of blades 23, the opposing surfaces 29 of which being straight and flat. The blades have knife-like, cutting sides 24, approaching each other toward the point, and an efficient, wood-milling point construction 25.

The point construction 25 comprises a straight and triangular point surface 26, which has a base 30, parallel to the opposing surface of the opposite blade, and milling edges 27, extending toward each other from the base and slightly curving inwards. Slanted guiding surfaces 28, curving at first toward each other, depart from the milling edges 27 to curvedly meet the straight knife-like sides 24. Inward-curving and cutting lower edges 31 of the guiding surfaces 28 form in the blades moving against each other a powerful, cutting, round-shape mouth, which cuts most of the material caught between the blades. The rest of the material is cut between the knife-like, long sides 24, as the blades move against each other, the opposing surfaces 29 tightly engaged.

The invention is not limited merely to the examples referred to above; instead many variations are possible within the scope of the inventive concept defined by the claims.

## Claims

1. A land clearing device for use in conjunction with a hydraulic boom crane, which land clearing device comprises:
a body (2) which can be connected to the head of the hydraulic boom crane (1);
a hydraulic motor (3,4), supported on the body;
a blade (5) comprising two blade panels (7), reciprocating at the same pace and in opposite directions, and operated by the hydraulic motor; and
the hydraulic motor (4) is a hydraulic cylinder to which the blade panels (7) are connected in order to reciprocate them;
**characterized in that**
two elongated blade guides (6) are supported on the body (2);
a space between the blade guides comprises said blade panels and both blade panels comprise knife-like blade rows (8), extending flush with each other in opposite directions; and
the hydraulic cylinder (19) is connected to one of the blade panels and a piston rod (20) of the hydraulic cylinder being connected to the other blade panel.

2. The land clearing device in accordance with claim 1, **characterized in that** the blade rows (8) comprise a set of V-shaped blades (9), both sides of which are sharp, and a point is directed out of the blade panel.

3. The land clearing device in accordance with claim 1, **characterized in that** blades (23) in the blade rows (8) comprise cutting, knife-like sides (24) and a milling point construction (25).

4. The land clearing device in accordance with claim 3, **characterized in that** the milling point construction (25) comprises a blade point surface (26) and guiding surfaces (28), curving inwards from milling edges (27) of the point surface.

5. The land clearing device in accordance with claim 1, **characterized in that** the hydraulic cylinder (19) and the piston rod (20) of the hydraulic cylinder are connected to a rocker arm (21), supported on the body of the clearing device.

6. The land clearing device in accordance with any one of claims 1 - 5, **characterized in that** the opposing surfaces of the blade panels and the opposing surfaces of the blade panels and the blade guides comprise lubricating grooves (13) for directing lubricant from the body to the surfaces which are rubbed against each other.

## Patentansprüche

1. Rodungsvorrichtung zur Verwendung in Verbindung mit einem hydraulischen Auslegerkran, welche Rodungsvorrichtung Folgendes umfasst:
einen Körper (2), der mit dem Kopf des hydraulischen Auslegerkrans (1) verbunden werden kann;
einen Hydraulikmotor (3, 4), der an dem Körper getragen ist;
eine Klinge (5), umfassend zwei Klingenpanele (7), die sich in der gleichen Geschwindigkeit und in entgegengesetzten Richtungen hin- und herbewegen, und durch den Hydraulikmotor betrieben werden; und
wobei der Hyraulikmotor (4) ein Hydraulikzylinder ist, mit dem die Klingenpanele (7) verbunden sind, um sie hin- und herzubewegen;
**dadurch gekennzeichnet, dass**
zwei längliche Klingenführungen (6) an dem Körper (2) getragen sind;
ein Raum zwischen den Klingenführungen die Klingenpanele umfasst, und beide Klingenpanele messerartige Klingenreihen (8) umfassen, die sich fluchtend miteinander in entgegengesetzten Richtungen erstrecken; und
der Hyraulikzylinder (19) mit einem von den Klingenpanelen verbunden ist, und eine Kolbenstange (20) des Hydraulikzylinders mit dem anderen Klingenpanel verbunden ist.

2. Rodungsvorrichtung nach Anspruch 1, **dadurch gekennzeichnet, dass** die Klingenreihen (8) einen Satz von V-förmigen Klingen (9) umfassen, deren beide Seiten scharf sind, und ein Punkt aus dem Klingenpanel heraus gerichtet ist.

3. Rodungsvorrichtung nach Anspruch 1, **dadurch gekennzeichnet, dass** Klingen (23) in den Klingenreihen (8) schneidende messerartige Seiten (24) und eine Mahlpunktkonstruktion (25) umfassen.

4. Rodungsvorrichtung nach Anspruch 3, **dadurch gekennzeichnet, dass** die Mahlpunktkonstruktion (25) eine Klingenpunktoberfläche (26) und Führungsoberflächen (28) umfasst, die einwärts von Mahlkanten (27) der Punktoberfläche gekrümmt sind.

5. Rodungsvorrichtung nach Anspruch 1, **dadurch gekennzeichnet, dass** der Hydraulikzylinder (19) und die Kolbenstange (20) des Hydraulikzylinders mit einem Kipphebel (21) verbunden sind, der an dem Körper der Rodungsvorrichtung getragen ist.

6. Rodungsvorrichtung nach einem der Ansprüche 1 bis 5, **dadurch gekennzeichnet, dass** die entgegengesetzten Oberflächen der Klingenpanele und die entgegengesetzten Oberflächen der Klingenpanele und der Klingenführungen Schmierrillen (13) umfassen, um ein Schmiermittel von dem Körper zu den Oberflächen zu leiten, die gegeneinander reiben.

## Revendications

1. Dispositif de défrichement destiné à être utilisé conjointement avec une grue à flèche hydraulique, lequel dispositif de défrichement comprend :
un corps (2) qui peut être relié à la tête de la grue à flèche hydraulique (1) ;
un moteur hydraulique (3, 4), monté sur le corps ;
une lame (5) comprenant deux panneaux de lame (7) qui effectuent des mouvements en va-et-vient au même rythme et dans des directions opposées et qui sont actionnés par le moteur hydraulique ; et
le moteur hydraulique (4) est un cylindre hydraulique auquel les panneaux de lame (7) sont reliés afin d'assurer leur mouvements en va-et-vient ;
**caractérisé en ce que**
deux guides de lame allongés (6) sont montés sur le corps (2) ;
un espace entre les guides de lame comprend lesdits panneaux de lame, et les deux panneaux de lame comprennent des rangées de lame (8) semblables à des couteaux, s'étendant au ras les unes des autres dans des directions opposées ; et
le cylindre hydraulique (19) est relié à l'un des panneaux de lame, et une tige de piston (20) du cylindre hydraulique est reliée à l'autre panneau de lame.

2. Dispositif de défrichement selon la revendication 1, **caractérisé en ce que** les rangées de lame (8) comprennent un ensemble de lames en forme de V (9), dont les deux côtés sont tranchants, et une pointe est dirigée hors du panneau de lame.

3. Dispositif de défrichement selon la revendication 1, **caractérisé en ce que** des lames (23) dans les rangées de lames (8) comprennent des côtés coupants semblables à des couteaux (24) et une construction de pointe de fraisage (25).

4. Dispositif de défrichement selon la revendication 3, **caractérisé en ce que** la construction de pointe de fraisage (25) comprend une surface de pointe de lame (26) et des surfaces de guidage (28) s'incurvant vers l'intérieur à partir des bords de fraisage (27) de la surface de pointe.

5. Dispositif de défrichement selon la revendication 1, **caractérisé en ce que** le cylindre hydraulique (19) et la tige de piston (20) du cylindre hydraulique sont reliés à un culbuteur (21) monté sur le corps du dispositif de défrichement.

6. Dispositif de défrichement selon l'une quelconque des revendications 1 à 5, **caractérisé en ce que** les surfaces opposées des panneaux de lame et les surfaces opposées des panneaux de lame et des guides de lames comprennent des rainures de lubrification (13) pour diriger un lubrifiant, du corps aux surfaces qui sont frottées les unes contre les autres.
